# EUROPEAN PATENT APPLICATION

(11) **EP 4 779 157 A1**
(43) Date of publication of application: **22.07.2026**
(21) Application number: 26152083.7
(22) Date of filing: 15.01.2026
(51) Int. Cl.: F04D 29/52, F04D 19/00, F04D 25/06, F04D 29/16, F04D 29/32

(54) **FAN DEVICE**

(30) Priority: 17.01.2025 TW 114200697 U
(71) Applicant: Cooler Master Co., Ltd., Taipei City 114065 (TW)
(72) Inventor: Shen, Jia-Hong, Taipei City (TW); Chen, Kuan-Chih, Taipei City (TW)
(74) Representative: Grünecker Patent- und Rechtsanwälte PartG mbB

(57) **Abstract**

A fan device comprises a fan frame and a fan blade structure. The fan frame includes a bottom portion and at least one side portion connected to the bottom portion, the at least one side portion arranged around a receiving space, the at least one side portion having a hollow structure in fluid communication with the receiving space. The fan blade structure is rotatably mounted to the bottom portion and located within the receiving space, the fan blade structure at least partially extending into the hollow structure.

## Description

### Background

With the rapid development of technology, processor computing performance has increased significantly, resulting in a great amount of heat generation. To ensure that the processor is not damaged by high heat, fans should be installed on electronic devices to dissipate excess heat from the processor, allowing the processor to operate within a certain temperature range.

In recent years, the demand for heat dissipation wattage of fans has increased, resulting in an increase in demand for the air volume generated by such fans. Currently, fan frames are generally made with plastic injection molding. However, the aforementioned manufacturing process limits the size of the fan blades and does not allow for increased air volume, resulting in a low heat dissipation efficiency of the fan, which cannot meet the increasing heat dissipation demand. Therefore, it is essential to increase the air volume generated by the fan during operation to improve the fan's heat dissipation efficiency. Summary

In general terms, this disclosure is directed to a fan device. In some embodiments, and by non-limiting example, the present disclosure provides a fan device with a fan frame having a hollow structure.

The invention is as defined in the appended claims. Aspects of the present disclosure provide a fan device comprising: a fan frame including a bottom portion and at least one side portion connected to the bottom portion, the at least one side portion arranged around a receiving space, the at least one side portion having a hollow structure in fluid communication with the receiving space; and a fan blade structure rotatably mounted to the bottom portion and located within the receiving space, the fan blade structure at least partially extending into the hollow structure.

In some examples, the fan frame includes a cover portion disposed on the fan frame opposite to the bottom portion, the cover portion includes a first opening in fluid communication with the receiving space such that airflow generated by the fan blade structure flows out of the receiving space through the first opening.

In some examples, the fan blade structure is at least partially disposed between the bottom portion and the cover portion.

In some examples, the hollow structure is positioned adjacent to the cover, and the cover covers one side of the hollow structure.

In some examples, the fan blade structure includes a hub portion rotatably mounted to the bottom portion and a blade portion connected to the hub portion.

In some examples, the fan blade structure includes an outer ring portion connected to one side of the blade portion distal from the hub portion, the outer ring portion being located at least partially in the hollow structure.

In some examples, the hub portion, the blade portion, and the outer ring portion are integrally formed as one piece.

In some examples, the hollow structure has a rectangular shape.

In some examples, the hollow structure is positioned away from the bottom portion.

In some examples, the hollow structure is positioned adjacent to one edge of the at least one side portion.

In some examples, the hollow structure shares an edge with the at least one side portion.

In some examples, an outer diameter of the fan blade structure is less than or equal to the shortest side length of the fan frame.

In some examples, an outer diameter of the fan blade structure is greater than or equal to 95% of the shortest side length of the fan frame.

In some examples, the at least one side portion includes four side portions collectively arranged around the receiving space, and the fan blade structure at least partially extends into each of the four side portions.

In some examples, each of the four side portions includes a hollow structure, and the fan blade structure at least partially extends into each of the four hollow structures.

In some examples, the at least one side portion includes a rib extending along with the hollow structure in a direction parallel to the cover portion.

Aspects of the present disclosure provide a fan frame comprising: a bottom portion, and at least one side portion connected to the bottom portion, the at least one side portion arranged around a receiving space for accommodating a fan blade structure, the at least one side portion having a hollow structure for accommodating the fan blade structure, the hollow structure being in fluid communication with the receiving space.

In some examples, the fan frame further comprises a cover portion disposed on the at least one side portion away from the bottom portion, the cover portion includes an opening in fluid communication with the receiving space.

In some examples, the hollow structure is disposed on one side of the at least one side portion adjacent to the cover, and the cover covers a side of the hollow structure.

In some examples, the at least one side portion includes a rib extending along with the hollow structure in a direction parallel to the cover portion.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### Brief Description of the Drawings

FIG. 1 is a perspective schematic view of a fan device according to one embodiment of the present disclosure.
FIG. 2 is an exploded view of the fan device shown in FIG. 1.
FIG. 3 is a top view of the fan device of FIG. 1 with the cover removed.
FIG. 4 is a bottom view of the fan device shown in FIG. 1.
FIG. 5 is a cross-sectional view of the fan device of FIG. 1 along line I-I.

### Detailed Description

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

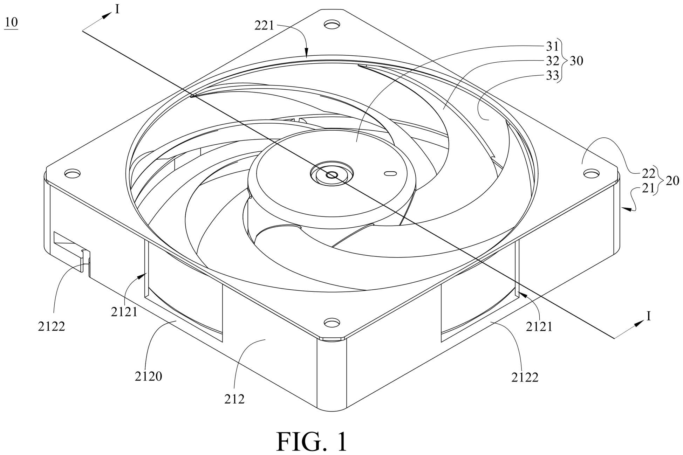

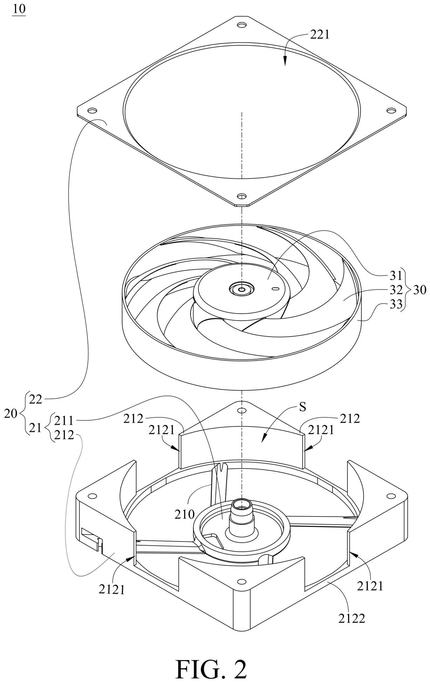

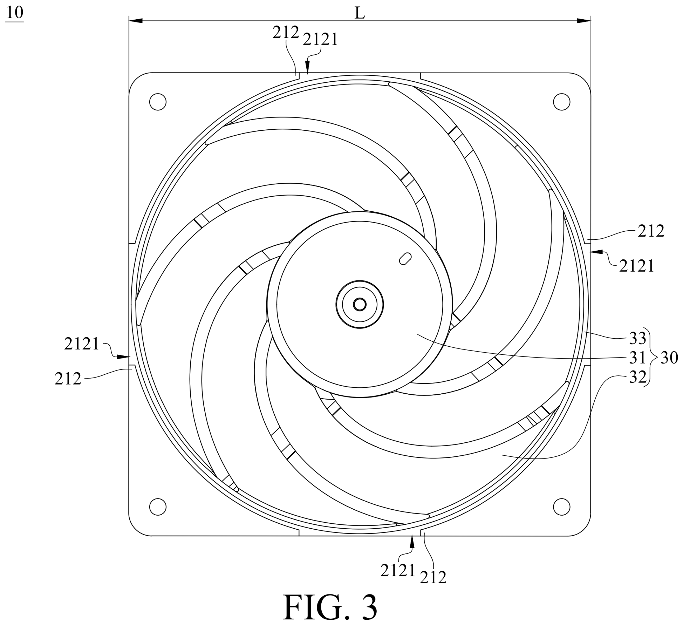

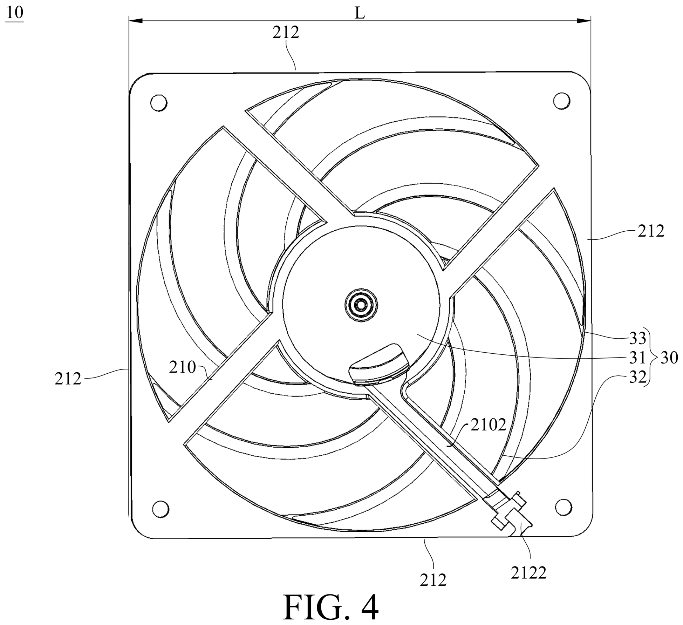

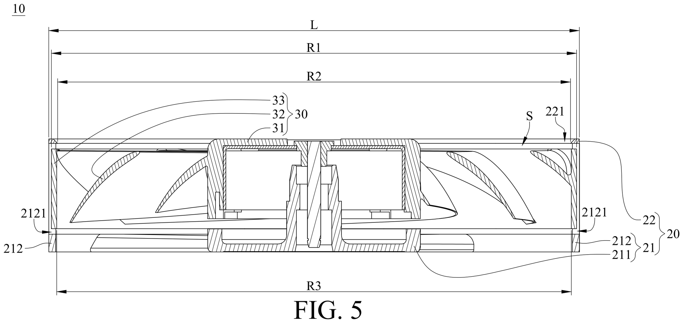

Please refer to FIG. 1 to FIG. 5. FIG. 1 is a perspective schematic view of a fan device according to one embodiment of the present disclosure. FIG. 2 is an exploded view of the fan device shown in FIG. 1. FIG. 3 is a top view of the fan device of FIG. 1 with the cover removed. FIG. 4 is a bottom view of the fan device shown in FIG. 1. FIG. 5 is a cross-sectional view of the fan device of FIG. 1 along line I-I.

In some embodiments, the fan device 10 is an axial flow fan that is used in fields such as computers, servers, or home appliances. The fan device 10 includes a fan frame 20 and a blade structure 30. The fan frame 20 is, for example, made by injection molding, and includes a base 21 and a cover 22. In some embodiments, the base 21 has a bottom portion 211 and four side portions 212. In some embodiments, the four side portions 212 are connected to the bottom portion 211, forming an accommodation space S.

In some embodiments, each side portion 212 includes a hollow structure 2121. The four hollow structures 2121, which may be rectangular in shape, communicate with the accommodation space S. In some embodiments, the cover 22 is disposed on the four side portions 212. In some embodiments, the cover 22 is secured to the four side portions 212 by screws (not shown). In some embodiments, the four hollow structures 2121 are positioned on a side of the four side portions 212 adjacent to the cover 22, which covers one side of the four hollow structures 2121. In some embodiments, the cover 22 has a first opening 221, and the first opening 221 is in communication with the accommodation space S.

In some embodiments, the blade structure 30 is rotatably disposed on the bottom portion 211 in the accommodation space S, and airflow generated by the blade structure 30 flows out of the accommodation space S from the first opening 221. In some embodiments, the blade structure 30 extends at least partially into the four hollow structures 2121, which means the outer diameter R1 of the blade structure 30 exceeds the range defined by the inner diameter R2 of the fan frame 20 through the four hollow structures 2121. Thus, the outer diameter R1 of the blade structure 30 expands, leading to an increase in the amount of the airflow generated by the blade structure 30.

In some embodiments, the blade structure 30 includes a hub portion 31, a blade portion 32, and an outer ring portion 33. In some embodiments, an outer side of the blade portion 32 connects to an inner surface of the outer ring portion 33. In some embodiments, the hub portion 31, the blade portion 32, and the outer ring portion 33 are integrally formed as the blade structure 30 in its entirety. In some embodiments, the hub portion 31 is rotatably disposed on the bottom portion 211 of the base 21, and the blade portion 32 is connected to the hub portion 31. The flow of the airflow can be adjusted by, for example, modifying the shape of the blade portion 32. In some embodiments, the outer ring portion 33 is secured to a side of the blade portion 32 away from the hub portion 31. In some embodiments, the outer ring portion 33 is located at least partially within the hollow structure 2121, as well as at least partially between the bottom portion 211 and the cover 22. In some embodiments, the outer diameter of the blade portion 32 may be maximized without obstructing with the fan frame 20, such as the hollow structures 2121 of the fan frame 20.

In some embodiments, the outer diameter R1 of the blade structure 30 is less than or equal to the shortest side length L of the fan frame 20, and/or greater than or equal to 95% of the shortest side length L of the fan frame 20. In some embodiments, the fan frame 20 is square, which means the shortest side length L of the fan frame 20 is equal to the length and width of the fan frame 20. However, as discussed, interference between the blade structure 30 and the fan frame 20 should be avoided to preserve longevity of the fan device 10. In some embodiments, the blade structure 30 includes an inner diameter R3, which may be 118.8 millimeters.

In some embodiments, the side portion 212 of the fan frame 20 includes the hollow structure 2121, and the blade structure 30 extends at least partially into the hollow structure 2121, which means that the outer diameter R1 of the blade structure 30 exceeds the inner diameter R2 of the fan frame 20 through the hollow structure 2121. In comparison to the embodiment of the fan device 10 without a hollow structure 2121, the present embodiments with a hollow structure 2121 can increase the size of the blade structure 30 by, for example, 4%, and the area of the blade structure 30 by, for example, 8%, resulting in an increase in the air volume generated during the operation of the fan device 10 by, for example, 20% to 40%. Therefore, the heat dissipation efficiency of the fan device 10 can be enhanced.

In some embodiments, each side portion 212 includes a rib 2120. In some embodiments, the rib 2120 is disposed adjacent to the bottom portion 211 and away from the cover 22. The rib 2120 can be extended along with the hollow structure 2121 in a direction parallel to the cover 22 for strengthening the side portion 212.

In some embodiments, the fan device 10 may be configured to enhance air volume, increase air pressure, or achieve a mean increase through the aforementioned configurations.

Taking the fan device 10, which is configured to enhance air volume as an example, when the blade structure 30 is at a low speed (for example, generating 23 decibels of noise), the air volume generated by the blade structure 30 can be increased from, for example, 41.62 cubic feet per minute (CFM) to 59.25 cubic feet per minute (an increase of, for example, about 40% in air volume). Furthermore, when the blade structure 30 is moving at a high speed (for example, generating 41 decibels of noise), the air volume generated by the blade structure 30 can be increased from 89.03 cubic feet per minute to 113.98 cubic feet per minute (tan increase of approximately about 28% in air volume).

Furthermore, taking the fan device 10 designed in the form of an average increase of both the air volume and the air pleasure as an example, the blade structure 30 can increase the air volume by about 15% to 21%, and can increase the air pressure by about 21% to 31%. In some embodiments, when the blade structure 30 is at a low speed (for example, generating 23 decibels of noise), the air volume generated by the blade structure 30 can be increased approximately from 41.62 cubic feet per minute to 48.19 cubic feet per minute, and the air pressure generated by the blade structure 30 can be increased approximately from 1.18 mmAq to 1.44 mmAq. Furthermore, when the blade structure 30 is moving at a high speed (for example, generating 41 decibels of noise), the air volume generated by the blade structure 30 can be increased approximately from 89.03 cubic feet per minute to 108.25 cubic feet per minute, and the air pressure generated by the blade structure 30 can be increased approximately from 4.40 mmAq to 5.76 mmAq.

In some embodiments, the blade structure 30 includes the outer ring portion 33 that maintains the air volume and air pressure generated by the blade structure. In some embodiments, the fan frame 20 includes the cover 22 that maintains the air pressure generated by the blade structure 30 while reducing the noise generated by the blade structure 30.

In some embodiments, the fan device 10 may also include a driving unit (not shown). The driving unit can be disposed on the bottom portion 211 of the fan frame 20 and connected to the hub portion 31. The driving unit can be used to drive the hub portion 31 to rotate relative to the fan frame 20. In some embodiments, the driving unit includes a stator (not shown) and a rotor (not shown). The stator and the rotor, for example, include the corresponding magnets or coils. The stator can be secured to the bottom portion 211 of the fan frame 20. The rotor can be rotatably secured to the hub portion 31 and can rotate relative to the stator via the electromagnetic effect, allowing the hub portion 31 to rotate relative to the fan frame 20.

In some embodiments, the bottom portion 211 of the fan frame 20 includes a second opening. A plurality of spokes 210 are arranged within the second opening to support the hub portion 31. In some embodiments, the spokes 210 are arranged in parallel pairs to enhance both structural strength and airflow uniformity.

In some embodiments, at least one spoke 210 is formed with a first groove 2102. The first groove 2102 can be configured to accommodate electrical connections to the hub portion 31, such as wires or conductive traces. In some embodiments, at least one of the side portions 212 includes a second groove 2122 that communicates with the first groove 2102 to accommodate electrical connections from an external component (for example, a power source) to the hub portion 31, simplifying the assembly process and improving reliability of the electrical interface between the driving unit and the external component.

In some embodiments, the number of the side portions 212 and the hollow structures 2121 is four. In other embodiments, the number of the side portions and the hollow structures may be three or less, or five or more. In some embodiments, the number of the hollow structures 2121 equals the number of the side portions 212. In some embodiments, the hollow structures 2121 are located at the middle of each of the side portions 212.

In some embodiments, the hollow structures 2121 are positioned on a side of the side portions 212 adjacent to the cover 22. In some embodiments, the hollow structures are positioned away from a side of the side portions adjacent to the cover.

In some embodiments, the hollow structure 2121 is rectangular. In some embodiments, the hollow structure can take on other shapes.

In some embodiments, the fan frame 20 is square, with the shortest side length L of the fan frame 20 being equal to the length and/or width of the fan frame 20. In some embodiments, the fan frame can take on other shapes.

In the embodiments with the hollow structures, the blade structure can at least partially extend into the hollow structures, which means the outer diameter of the blade structure exceeds the inner diameter of the fan frame through the hollow structures. Therefore, in comparison to the fan device without the hollow structure, the present embodiment can increase the size of the blade structure 30 by, for example, 4%, and the area of the blade structure by, for example, 8%, resulting in an increase in the air volume generated during the operation of the device 10 by, for example, 20% to 40%. Therefore, the heat dissipation efficiency of the fan device can be enhanced. In the embodiments with the outer ring portion, the air pressure and air volume generated by the blade structure can be maintained. In the embodiments with the cover, the air pressure generated by the blade structure can be maintained while the noise generated by the blade structure is reduced.

The embodiments illustratively disclosed herein suitably may be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of" the various components and steps. All numbers and ranges disclosed above may vary by some number. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces.

## Claims

1. A fan device (10) comprising: a fan frame (20) including a bottom portion (211) and at least one side portion (212) connected to the bottom portion (211), the at least one side portion (212) arranged around a receiving space (S), the at least one side portion (212) having a hollow structure (2121) in fluid communication with the receiving space (S); and a fan blade structure (30) rotatably mounted to the bottom portion (211) and located within the receiving space (S), the fan blade structure (30) at least partially extending into the hollow structure (2121).

2. The fan device (10) of claim 1, wherein the fan frame (20) includes a cover portion (22) disposed on the fan frame (20) opposite to the bottom portion (211), the cover portion (22) includes a first opening (221) in fluid communication with the receiving space (S) such that airflow generated by the fan blade structure (30) flows out of the receiving space (S) through the first opening (221).

3. The fan device (10) of claim 2, wherein the fan blade structure (30) is at least partially disposed between the bottom portion (211) and the cover portion (22).

4. The fan device (10) of claim 2, wherein the hollow structure (2121) is positioned adjacent to the cover (22), and the cover (22) covers one side of the hollow structure (2121).

5. The fan device (10) of claim 1, wherein the fan blade structure (30) includes a hub portion (31) rotatably mounted to the bottom portion (211) and a blade portion (32) connected to the hub portion (31).

6. The fan device (10) of claim 5, wherein the fan blade structure (30) includes an outer ring portion (33) connected to one side of the blade portion (32) distal from the hub portion (31), the outer ring portion (33) being located at least partially in the hollow structure (2121).

7. The fan device (10) of claim 6, wherein the hub portion (31), the blade portion (32), and the outer ring portion (33) are integrally formed as one piece.

8. The fan device (10) of any one of claims 1, 2, or 5, wherein the hollow structure (2121) has a rectangular shape.

9. The fan device (10) of any one of claims 1, 2, or 5, wherein the hollow structure (2121) is positioned away from the bottom portion (211).

10. The fan device (10) of any one of claims 1, 2, or 5, wherein the hollow structure (2121) is positioned adjacent to one edge of the at least one side portion (212).

11. The fan device (10) of any one of claims 1, 2, or 5, wherein the hollow structure (2121) shares an edge with the at least one side portion (212).

12. The fan device (10) of any one of claims 1, 2, or 5, wherein an outer diameter (R1) of the fan blade structure (30) is less than or equal to the shortest side length (L) of the fan frame (20).

13. The fan device (10) of any one of claims 1, 2, or 5, wherein an outer diameter (R1) of the fan blade structure (30) is greater than or equal to 95% of the shortest side length (L) of the fan frame (20).

14. The fan device (10) of claim 1, wherein the at least one side portion includes four side portions (212) collectively arranged around the receiving space (S), and the fan blade structure (30) at least partially extends into each of the four side portions (212).

15. The fan device (10) of claim 14, wherein each of the four side portions (212) includes a hollow structure (2121), and the fan blade structure (30) at least partially extends into each of the four hollow structures (2121).

16. The fan device (10) any one of claims 2 to 4, wherein the at least one side portion (212) includes a rib (2120) extending along with the hollow structure (2121) in a direction parallel to the cover portion (22).

17. A fan frame (20) comprising: a bottom portion (211), and at least one side portion (212) connected to the bottom portion (211), the at least one side portion (212) arranged around a receiving space (S) for accommodating a fan blade structure (30), the at least one side portion (212) having a hollow structure (2121) for accommodating the fan blade structure (30), the hollow structure (2121) being in fluid communication with the receiving space (S).

18. The fan frame (20) of claim 17, further comprising a cover portion (22) disposed on the at least one side portion (212) away from the bottom portion (211), the cover portion (22) includes an opening (221) in fluid communication with the receiving space (S).

19. The fan frame (20) of claim 18, wherein the hollow structure (2121) is disposed on one side of the at least one side portion (212) adjacent to the cover (22), and the cover (22) covers one side of the hollow structure (2121).

20. The fan frame (20) of claim 18 or 19, wherein the at least one side portion (212) includes a rib (2120) extending along with the hollow structure (2121) in a direction parallel to the cover portion (22).
